# EUROPÄISCHE PATENTSCHRIFT

(11) **EP 1 787 406 B1**
(45) Veröffentlichungstag und Bekanntmachung des Hinweises auf die Patenterteilung: **19.11.2008**
(21) Anmeldenummer: 05779147.7
(22) Anmeldetag: 03.08.2005
(51) Int. Cl.: H04B 10/00

(54) **VERBINDUNGSEINHEIT ZUR ANBINDUNG EINES ELEKTRONISCHEN GERÄTES AN EINEN OPTISCHEN DATENBUS**
CONNECTION UNIT FOR CONNECTING AN ELECTRONIC DEVICE TO AN OPTICAL DATA BUS
UNITE DE LIAISON POUR RACCORDER UN APPAREIL ELECTRONIQUE A UN BUS DE DONNEES OPTIQUE

(30) Priorität: 07.09.2004 DE 102004043254
(43) Veröffentlichungstag der Anmeldung: 23.05.2007
(73) Patentinhaber: Continental Automotive GmbH, 30165 Hannover (DE)
(72) Erfinder: NAGEL, Thomas, 35796 Gräveneck (DE)
(86) Internationale Anmeldenummer: PCT/EP2005/053815
(87) Internationale Veröffentlichungsnummer: WO 2006/027296

(56) Entgegenhaltungen:
- EP-A- 0 267 074
- US-A- 5 432 340

## Beschreibung

Die Erfindung betrifft eine Verbindungseinheit zur Anbindung eines elektrischen Gerätes an mindestens einen Bus-Lichtwellenleiter eines optischen Datenbusses mit einem Steckergehäuse, mindestens einem Geräte-Lichtwellenleiter, der eine erste und eine zweite Lichtdurchtrittsfläche aufweist, wobei die erste Lichtdurchtrittsfläche innerhalb des Steckergehäuses angeordnet ist, einer innerhalb des Steckergehäuses angeordneten mechanischen Ausgleichseinheit zur Gewährleistung eines ausreichenden optischen Kontaktes zwischen der ersten Lichtdurchtrittsfläche des Geräte-Lichtwellenleiters und einer Lichtdurchtrittsfläche des Bus-Lichtwellenleiters sowie einer mit der zweiten Lichtdurchtrittsfläche des Geräte-Lichtwellenleiters verbundenen Umwandlungseinheit zur Umwandlung von optischen Signalen in elektrische Signale und/oder von elektrischen Signalen in optische Signale.

Die EP-A-0 267 074 offenbart eine Verbindung eines externen Lichtwellenleiters mit einem optoelektronischen Sender bzw. Empfänger. Der optoelektronische Sender bzw. Empfänger befindet sich dabei gemeinsam mit einem internen Lichtwellenleiter in einem eigenen Gehäuse, welches auf einer Leiterplatte hinter der Gehäusewand eines elektrischen Gerätes angebracht ist. Das Gehäuse weist eine Art optische Buchse auf, die durch eine Öffnung in der Gehäusewand hindurchragt. Das geräteseitige Ende des externen Lichtwellenleiters, welches in der Form eines männlichen optischen Steckers ausgeführt ist, wird durch die Öffnung in der Gehäusewand hindurch mit der optischen Buchse verbunden. Zwischen dem Gehäuse des Senders bzw. Empfängers und der Gehäusewand sind ein metallischer Schirm, eine Ringfeder und ein Metallring angebracht. Die Ringfeder erlaubt eine axiale Bewegung des Metallrings infolge einer beim Verbinden des externen Lichtwellenleiters mit dem internen Lichtwellenleiter ausgeübten Druckkraft.

Aus der US-A-5,432,340 ist ein photoelektrischer Wandler bekannt, beim dem Licht einer LED in einen Lichtwellenleiter eingeleitet wird.

Eine eingangs genannte Verbindungseinheit wird in heutigen Kraftfahrzeugen eingesetzt, um elektronische Informations-und Unterhaltungsgeräte an einen gemeinsamen optischen Datenbus, den MOST-Bus (Media Oriented Systems Transport), anzuschließen. Unter Informations- und Unterhaltungsgeräten versteht man dabei zum Beispiel Autoradios, CD- und DVD-Spieler, Navigationssysteme, Mobiltelefone mit Freisprecheinrichtung und PDA's. Ebenso können Mikrophone und Lautsprecher als eigenständige Geräte an den MOST-Bus angeschlossen werden. Eine Ausführung eines Audio- und/oder Videosystems, bei dem verschiedenartige Audio- und/oder Videogeräte über ein ringförmiges lokales Netzwerk, wie beispielsweise einen MOST-Bus, miteinander verbunden sind, wird in der DE 199 63 155 A1 beschrieben.

Bei der bekannten Verbindungseinheit werden jeweils zwei zum Bus gehörende Lichtwellenleiter mit zwei zu einem Gerät gehörenden Lichtwellenleitern über einen Steckverbinder verbunden. Die Geräte-Lichtwellenleiter reichen hinter dem Steckverbinder in das Innere des Gerätes hinein bis zu der Stelle, an dem die eingehenden Bus-Signale benötigt, d.h. abgegriffen und verarbeitet, sowie die ausgehenden Bus-Signale erzeugt werden. Die Umwandlung der optischen Bus-Signale in elektrische Signale findet dabei an dieser Stelle über einen Receiver und die Umwandlung der elektrischen in optische Signale über einen Transmitter statt. Anstelle der zwei Lichtwellenleiter könnte bei einer anderen Spezifikation eines optischen Datenbusses auch nur ein Lichtwellenleiter im Duplex-Betrieb verwendet werden.

Die bekannte Verbindungseinheit erfordert innerhalb des elektronischen Gerätes relativ viel Platz. Außerdem ist sie in der Montage aufwändig und damit teuer.

Aufgabe der vorliegenden Erfindung ist es deshalb, eine Verbindungseinheit der eingangs genannten Art anzugeben, die platzsparender und einfacher zu montieren ist.

Diese Aufgabe wird mit einer Verbindungseinheit nach Anspruch 1 gelöst, bei der auch die zweite Lichtdurchtrittsfläche des Geräte-Lichtwellenleiters und die Umwandlungseinheit in dem Steckergehäuse angeordnet sind und bei der die Umwandlungseinheit mit einer elektrischen Übertragungsleitung verbunden ist.

Die Grundidee besteht darin, nicht mehr die optischen Signale an einen tiefer im Gehäuseinneren befindlichen Ort zu transportieren sondern die elektrischen. Die Übertragung der elektrischen Signale erfolgt dabei über die elektrische Übertragungsleitung. Die optisch-elektrische Schnittstele, also die Umwandlungseinheit, kann damit in das Steckergehäuse hineinverlagert werden, wodurch der im Inneren des Gehäuses benötigte Bauraum reduziert wird, und zwar um den Teil des Geräte-Lichtwellenleiters, der ursprünglich vom Stecker ausgehend in das Gehäuseinnere hineinreichte, sowie um die Umwandlungseinheit selbst.

Der Montageaufwand wird durch diese integrierte Steckeranordnung deutlich reduziert. Anstelle des einzelnen Befestigens und miteinander Verbindens von Steckergehäuse, Geräte-Lichtwellenleiter und Umwandlungseinheit ist nur noch der eine Schritt des Befestigens des Steckers zur Montage der gesamten Verbindungseinheit erforderlich.

Die erfindungsgemäße Lösung bringt auch den weiteren Vorteil, dass der Geräte-Lichtwellenleiter und die Übertragungseinheit in dem Steckergehäuse fest fixiert und geschützt sind, d.h. ihre mechanische Stabilität und ihre Lebensdauer bzw. die Lebensdauer ihrer Verbindung wird erhöht.

In einer Ausgestaltung der Erfindung besteht die elektrische Übertragungsleitung aus flexiblem Material. Die Verbindungseinheit ist damit für beliebige Gerätekonstruktionen einsetzbar, da eine flexible Übertragungsleitung zu jeder beliebigen Stelle im Geräteinneren geführt werden kann und dort mit einem elektrischen Verbindungselement an die Geräteelektronik anschließbar ist.

In einer Weiterbildung der Erfindung ist das Steckergehäuse auf einer Leiterplatte befestigt und die Übertragungsleitung steht mit einer auf dieser Leiterplatte aufgebrachten Kontaktierungsstelle oder Leiterbahn in elektrischem Kontakt. Diese Ausgestaltung eignet sich besonders für solche Gerätearten, bei denen aufgrund mangelnden Bauraums selbst ein Verlegen eines flexiblen elektrischen Kabels im Inneren des Gehäuses nur schwer möglich ist. Der Abgriff der elektrischen Datenbus-Signale erfolgt dann in unmittelbarer Nähe des Bus-Steckers. von wo aus die Signale per Leiterbahnen und eventuell über einen internen Geräte-Bus weitergeleitet werden. Da die im Steckergehäuse integrierte Umwandlungseinheit aufgrund eines unter Umständen erforderlichen Längenausgleichs in Grenzen beweglich sein muss, kommen für die Kontaktierung neben kurzen flexiblen Kabeln auch Schleifer oder Blattfedern in Frage, die entlang der Leiterbahn bzw. der Kontaktierungsstelle bewegt werden.

In einer bekannten Verbindungseinheit ist der im Steckergehäuse befindliche Teil des Geräte-Lichtwellenleiters durch ein Art Blattfeder fixiert, die dafür sorgt, dass bei einem Aufstecken des Bus-Lichtwellenleiters ein Kraftausgleich stattfinden kann, so dass die Stirnfläche, also die erste Lichtdurchtrittsfläche, des Geräte-Lichtwellenleiters stets planparallel zur Stirnfläche des Bus-Lichtwellenleiters ausgerichtet ist. Auf diese Weise wird der ausreichende optische Kontakt zwischen den beiden Lichtwellenleitern hergestellt bzw. gesichert. Weiterhin weist die bekannte Verbindungseinheit ein Längenausgleichselement auf, um die beiden Lichtwellenleiter im bestmöglichen Abstand einander gegenüber zu bringen.

In einer bevorzugten Weiterbildung der Erfindung wird nur noch ein Ausgleichselement verwendet, mit dem sowohl ein Kraft- als auch ein Längenausgleich durchgeführt wird. Mit nur einem Bauteil werden also zwei Funktionen realisiert.

Dieses Ausgleichselement ist bevorzugt ein Federelement. Eine vorteilhafte Anordnung eines solchen Federelementes erfolgt dabei so, dass die beim Aufstecken des Bus-Lichtwellenleiters auf den Stecker ausgeübte Kraft zu einer Längenänderung des Federelementes führt. Auf diese Weise wird die Aufsteckkraft vom Federelement aufgenommen, d.h. sie kann nicht zu einer Verbiegung oder Verschiebung der Lage der Lichtwellenleiter zueinander führen, und es erfolgt gleichzeitig ein Längenausgleich, da die Feder erst dann reagiert, wenn die Lichtwellenleiter mit ihren Stirnflächen planparallel aufeinander aufliegen.

Die Erfindung wird nachfolgend anhand eines Ausführungsbeispiels und der Zeichnung näher erläutert. Es zeigen:
- Fig. 1: bekannte Verbindungseinheit;
- Fig. 2: Vergrößerungsausschnitt des Steckers aus Figur 1;
- Fig. 3: Verbindungseinheit mit Federelement als Ausgleichselement.

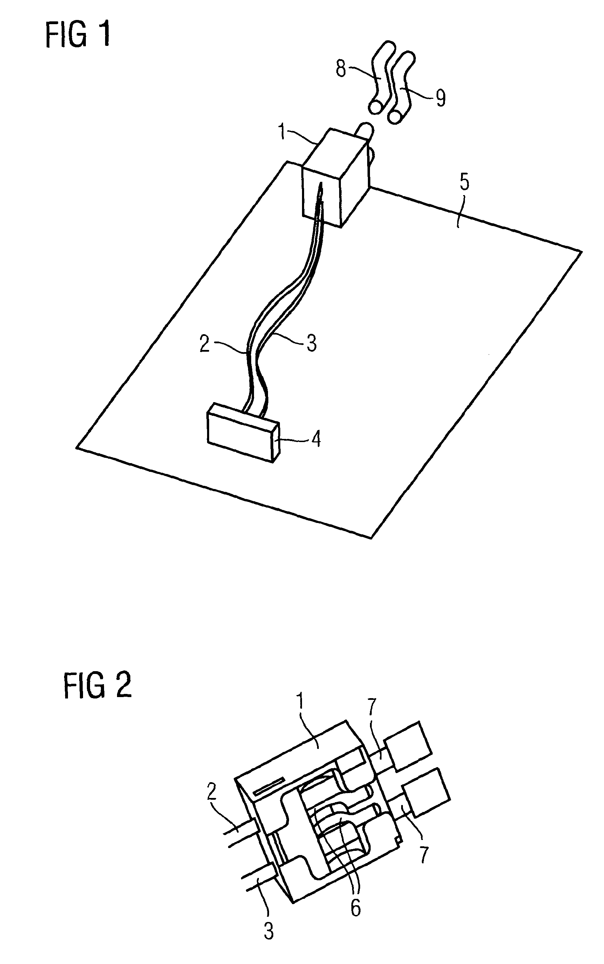

In Figur 1 ist eine bekannte Ausführung einer Verbindungseinheit dargestellt, wie sie in heutigen Fahrzeugen zur Anbindung eines elektronischen Gerätes an zwei zu einem MOST-Bus gehörende Bus-Lichtwellenleiter 8 und 9 eingesetzt wird. Die Bus-Lichtwellenleiter 8 und 9 sind hier lediglich schematisch und geschnitten dargestellt.

Die Verbindungseinheit besteht aus einem Steckergehäuse 1, zwei Geräte-Lichtwellenleitern 2 und 3 und einer Umwandlungseinheit 4. Die Umwandlungseinheit 4 enthält einen Receiver, der mit dem Geräte-Lichtwellenleiter 2 verbunden ist und zur Umwandlung der vom MOST-Bus kommenden optischen Signale in elektrische Signale dient, sowie einen Transmitter, der mit dem Geräte-Lichtwellenleiter 3 verbunden ist und elektrische Signale in an den MOST-Bus zu sendende optische Signale umwandelt. Bei Verwendung eines anderen optischen Datenbusses kann anstelle der zwei einzelnen Geräte-Lichtwellenleiter im Simplex-Betrieb auch ein einziger Geräte-Lichtwellenleiter im Duplex-Betrieb zur Anwendung kommen.

Das Steckergehäuse 1 und die Umwandlungseinheit 4 sind auf einer Leiterplatte 5 befestigt. Die Geräte-Lichtwellenleiter 2 und 3 sind mit einer ausreichenden Länge ausgeführt, so dass die Umwandlungseinheit 4 genau dort platziert werden kann, wo die optischen Bus-Signale empfangen bzw. generiert werden. Auf der Leiterplatte 5 sind dementsprechend weitere, nicht dargestellte elektronische Bauteile angeordnet, die die elektrischen Bus-Signale verarbeiten und der Funktion des elektronischen Gerätes dienen.

Wie der in Figur 2 vergrößert und gedreht dargestellten Ansicht des Steckergehäuses 1 entnommen werden kann, sind die beiden Geräte-Lichtwellenleiter 2 und 3 jeweils über eine Blattfederung 6 in ihrer Lage fixiert. Des weiteren weist das Steckergehäuse 1 zwei Bereiche 7 auf, die zum Längenausgleich und damit zur Einstellung des richtigen Abstandes zwischen den beiden Geräte-Lichtwellenleitern 2 und 3 und den jeweils mit diesen in optischen Kontakt zu bringenden Bus-Lichtwellenleitern 8 und 9 dienen. Der Geräte-Lichtwellenleiter 2 tritt dabei in optischen Kontakt mit dem Bus-Lichtwellenleiter 8 und der Geräte-Lichtwellenleiter 3 mit dem Bus-Lichtwellenleiter 9.

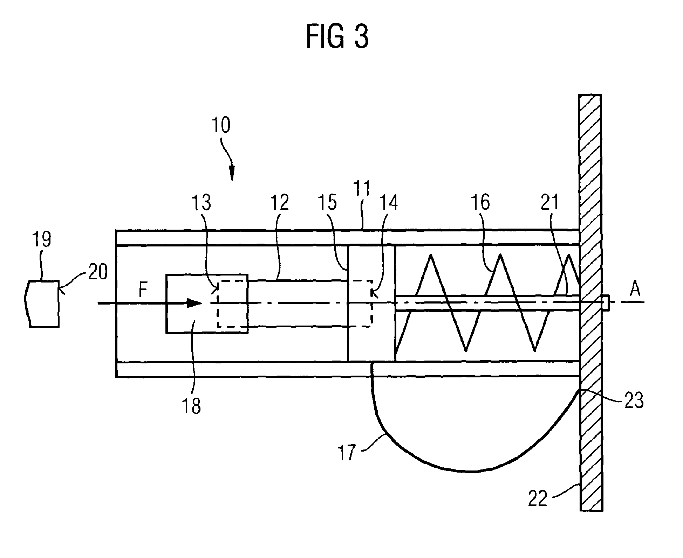

In Figur 3 ist eine Verbindungseinheit 10 zu sehen, bei der entsprechend der vorliegenden Erfindung ein Geräte-Lichtwellenleiter 12 mit einer ersten Lichtdurchtrittsfläche 13 und einer zweiten Lichtdurchtrittsfläche 14, eine Umwandlungseinheit 15 sowie ein Ausgleichselement 16 in einem Steckergehäuse 11 untergebracht sind und bei der die Umwandlungseinheit 15 mit einer elektrischen Übertragungsleitung 17 verbunden ist. Die Übertragungsleitung 17 ist ein Flachbandkabel zur parallelen Übertragung der elektrischen Bus-Signale. Alternativ könnte bei einem seriellen Bus-Protokoll auch ein Kabel mit einem einzigen leitenden Draht verwendet werden.

Die erste Lichtdurchtrittsfläche 13 ist von einer Hülse 18 umgeben. Bei der Herstellung einer optischen Verbindung zwischen dem Geräte-Lichtwellenleiter 12 und einem Bus-Lichtwellenleiter 19 wird der Bus-Lichtwellenleiter 19 mit einer Lichtdurchtrittsfläche 20 in das Steckergehäuse 11 eingeführt und in unmittelbarer Nähe zur ersten Lichtdurchtrittsfläche 13 des Geräte-Lichtwellenleiters 12 planparallel zu dieser ausgerichtet. Sobald der Bus-Lichtwellenleiter 19 in mechanischen Kontakt mit der Hülse 18 bzw. mit dem Geräte-Lichtwellenleiter 12 getreten ist, wirkt eine Kraft F in Richtung der Längsachse A auf den Geräte-Lichtwellenleiter 12, die Umwandlungseinheit 15 sowie auf die Ausgleichseinheit 16. Im Inneren des Federelements der Ausgleichseinheit 16 befindet sich zur mechanischen Stabilisierung zusätzlich eine axiale Führung 21. Das Federelement der Ausgleichseinheit 16 wird aufgrund der Kraft F zusammengedrückt, d.h. die gesamte Anordnung aus Geräte-Lichtwellenleiter 12, Umwandlungseinheit 15 und Ausgleichseinheit 16 gibt nach. Die Ausgleichseinheit 16 nimmt also nicht nur die Kraft F auf und wirkt damit kraftausgleichend, sondern sie verursacht gleichzeitig auch eine Längenänderung bzw. einen Längenausgleich. Auf diese Weise wird ein Verbiegen oder seitliches Verschieben des Geräte-Lichtwellenleiters 12 vermieden, so dass ein ausreichender optischer Kontakt zum Bus-Lichtwellenleiter 19 gewährleistet werden kann.

Die Verbindungseinheit 10 ist auf einer Leiterplatte 22 befestigt, die in Figur 3 nur ausschnittsweise dargestellt ist. Die Übertragungsleitung 17 ist mit der Leiterplatte 22 an der Kontaktstelle 23 elektrisch verbunden, so dass die elektrischen Bus-Signale von und zu einer auf der Leiterplatte 22 befindlichen elektronischen Schaltung geleitet werden können.

## Patentansprüche

1. Verbindungseinheit (10) zur Anbindung eines elektrischen Gerätes an mindestens einen Bus-Lichtwellenleiter (19) eines optischen Datenbusses mit
- einem Steckergehäuse (11),
- mindestens einem Geräte-Lichtwellenleiter (12), der eine erste (13) und eine zweite (14) Lichtdurchtrittsfläche aufweist, wobei die erste Lichtdurchtrittsfläche (13) innerhalb des Steckergehäuses (11) angeordnet ist,
- einer innerhalb des Steckergehäuses (11) angeordneten mechanischen Ausgleichseinheit (16) zur Gewährleistung eines ausreichenden optischen Kontaktes zwischen der ersten Lichtdurchtrittsfläche (13) des Geräte-Lichtwellenleiters (12) und einer Lichtdurchtrittsfläche (20) des Bus-Lichtwellenleiters (19) sowie
- einer mit der zweiten Lichtdurchtrittsfläche (14) des Geräte-Lichtwellenleiters (12) verbundenen Umwandlungseinheit (15) zur Umwandlung von optischen Signalen in elektrische Signale und/oder von elektrischen Signalen in optische Signale, **dadurch gekennzeichnet dass**
- auch die zweite Lichtdurchtrittsfläche (14) des Geräte-Lichtwellenleiters (12) und die Umwandlungseinheit (15) in dem Steckergehäuse (11) angeordnet sind,
- die Umwandlungseinheit (15) mit einer elektrischen Übertragungsleitung (17) verbunden ist und
- die Umwandlungseinheit (15) für einen Längenausgleich zwischen dem Bus-Lichtwellenleiter (19) und dem Geräte-Lichtwellenleiter (12) in Grenzen beweglich ist.

2. Verbindungseinheit (10) nach Anspruch 1, **dadurch gekennzeichnet, dass** die Übertragungsleitung (17) aus flexiblem Material besteht.

3. Verbindungseinheit (10) nach Anspruch 1 oder 2, **dadurch gekennzeichnet, dass** das Steckergehäuse (11) auf einer Leiterplatte (22) befestigt ist und dass die Übertragungsleitung (17) mit einer auf der Leiterplatte (22) aufgebrachten Kontaktierungsstelle (23) oder Leiterbahn in elektrischem Kontakt steht.

4. Verbindungseinheit (10) nach einem der vorhergehenden Ansprüche, **dadurch gekennzeichnet, dass** die Ausgleichseinheit (16) sowohl einen Längenausgleich als auch einen Kräfteausgleich vornimmt.

5. Verbindungseinheit (10) nach Anspruch 4, **dadurch gekennzeichnet, dass** die Ausgleichseinheit (16) ein Federelement ist, welches auf eine Kraft, die beim Herstellen des optischen Kontaktes zwischen der ersten Lichtdurchtrittsfläche (13) des Geräte-Lichtwellenleiters (12) und der Lichtdurchtrittsfläche (20) des Bus-Lichtwellenleiters (19) auf den Geräte-Lichtwellenleiter (12) wirkt, mit einer Längenänderung reagiert.

## Claims

1. Connecting unit (10) for connecting an electrical appliance to at least one bus optical fibre (19) in an optical data bus, having
- a connector housing (11),
- at least one appliance optical fibre (12), which has a first (13) and a second (14) light passage area, the first light passage area (13) being arranged within the connector housing (11),
- a mechanical equalization unit (16), arranged within the connector housing (11), for ensuring adequate optical contact between the first light passage area (13) of the appliance optical fibre (12) and a light passage area (20) of the bus optical fibre (19), and
- a converter unit (15), connected to the second light passage area (14) of the appliance optical fibre (12), for converting optical signals into electrical signals and/or electrical signals into optical signals, **characterized in that**
- the second light passage area (14) of the appliance optical fibre (12) and the conversion unit (15) are also arranged in the connector housing (11),
- the conversion unit (15) is connected to an electrical transmission line (17), and
- the conversion unit (15) has limited movement for length equalization between the bus optical fibre (19) and the appliance optical fibre (12).

2. Connecting unit (10) according to Claim 1, **characterized in that** the transmission line (17) comprises flexible materials.

3. Connecting unit (10) according to Claim 1 or 2, **characterized in that** the connector housing (11) is mounted on a printed circuit board (22) and **in that** the transmission line (17) is in electrical contact with a contacting point (23) or conductor track fitted on the printed circuit board (22).

4. Connecting unit (10) according to one of the preceding claims, **characterized in that** the equalization unit (16) performs both length equalization and force equalization.

5. Connecting unit (10) according to Claim 4, **characterized in that** the equalization unit (16) is a spring element which reacts with a change of length to a force which acts on the appliance optical fibre (12) when the optical contact is made between the first light passage area (13) of the appliance optical fibre (12) and the light passage area (20) of the bus optical fibre (19).

## Revendications

1. Unité de liaison (10) destinée à raccorder un appareil électrique à au moins un guide d'ondes optiques (19) d'un bus optique de données, comportant
- un boîtier de connecteur (11),
- au moins un guide d'ondes optiques (12) de l'appareil, lequel guide d'ondes optiques a une première (13) et une deuxième (14) surface d'entrée de l'onde optique, la première surface d'entrée (13) de l'onde optique étant logée à l'intérieur du boîtier de connecteur (11),
- une unité de compensation mécanique (16) placée à l'intérieur du boîtier de connecteur (11) et assurant un contact optique suffisant entre la première surface d'entrée (13) de l'onde optique du guide d'ondes optiques (12) de l'appareil et une surface d'entrée (20) de l'onde optique du guide d'ondes optiques (19) du bus, ainsi que
- une unité de conversion (15) reliée à la deuxième surface d'entrée (14) de l'onde optique du guide d'ondes optiques (12) de l'appareil et destinée à convertir des signaux optiques en signaux électriques et/ou des signaux électriques en signaux optiques,
**caractérisée par le fait que**
- la deuxième surface d'entrée (14) de l'onde optique du guide d'ondes optiques (12) de l'appareil et l'unité de conversion (15) sont elles-aussi logées dans le boîtier de connecteur (11),
- l'unité de conversion (15) est reliée à un conducteur de transmission électrique (17) et
- l'unité de conversion (15) est, dans certaines limites, mobile pour permettre une compensation longitudinale entre le guide d'ondes optiques (19) du bus et le guide d'ondes optiques (12) de l'appareil.

2. Unité de liaison (10) selon la revendication 1, **caractérisée par le fait que** le conducteur de transmission (17) est en une matière souple.

3. Unité de liaison (10) selon la revendication 1 ou 2, **caractérisée par le fait que** le boîtier de connecteur (11) est fixé sur une carte à circuits imprimés (22) et que le conducteur de transmission (17) se trouve en contact électrique avec un point de contact (23) ou une piste conductive apporté (ou apportée) sur la carte à circuits imprimés (22).

4. Unité de liaison (10) selon l'une des revendications précédentes, **caractérisée par le fait que** l'unité de compensation (16) assure aussi bien une compensation longitudinale qu'une compensation d'efforts.

5. Unité de liaison (10) selon la revendication 4, **caractérisée par le fait que** l'unité de compensation (16) est un organe à ressort qui réagit par une modification de sa longueur à un effort se produisant sur le guide d'ondes optiques (12) de l'appareil lors de la fabrication du contact optique entre la première surface d'entrée (13) de l'onde optique du guide d'ondes optiques (12) de l'appareil et la surface d'entrée (20) de l'onde optique du guide d'ondes optiques (19) du bus.
